# EUROPÄISCHE PATENTANMELDUNG

(11) **EP 2 161 933 A1**
(43) Veröffentlichungstag der Anmeldung: **10.03.2010**
(21) Anmeldenummer: 08105214.4
(22) Anmeldetag: 03.09.2008
(51) Int. Cl.: H04N 7/24

(54) **Vorrichtung und Verfahren zum Bereitstellen von Audio- und/oder Videodaten für IP-TV**

(71) Anmelder: Deutsche Telekom AG, 53113 Bonn (DE)
(72) Erfinder: Emser, Heiko, 64372, Ober-Ramstadt (DE)

(57) **Zusammenfassung**

Die Erfindung betrifft eine Vorrichtung und ein Verfahren zum Bereitstellen bzw. Aufbereiten von Audio- und/oder Videodaten zur Ausgabe an ein IP-TV Netzwerk. Ein Aspekt der Erfindung basiert auf der frühzeitigen Kodierung von A/V-Daten in das Zielformat, um in den nachfolgenden Schritten, insbesondere der Speicherung und der Übertragung der Daten von einem Produktionsstandort zu einem Ausspielort, den Verarbeitungsaufwand zu minimieren.

## Beschreibung

Die Erfindung betrifft eine Vorrichtung und ein Verfahren zum Bereitstellen bzw. Aufbereiten von Audio- und/oder Videodaten zur Ausgabe an ein IP-TV Netzwerk.

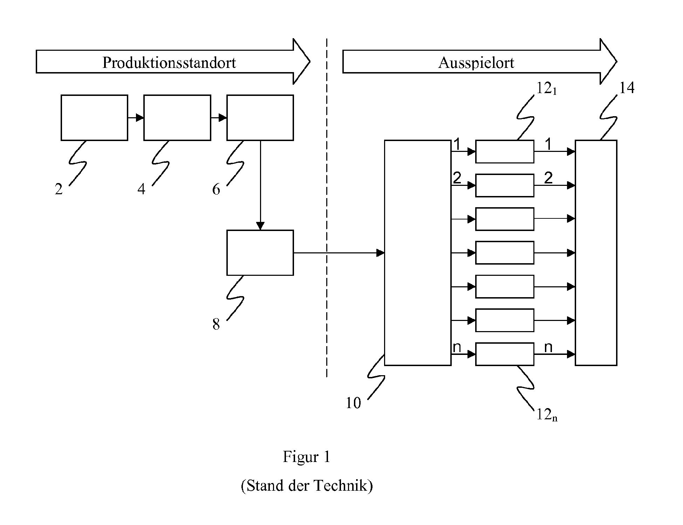

In bekannten Systemen, wie schematisch in Fig. 1 dargestellt, werden Audio- und/oder Videodaten hoher Signalqualität, im Folgenden auch als Quellmaterial bezeichnet, für die Postproduktion von einem Quellmaterialspeicher 2 bereitgestellt. Ein solcher Quellmaterialspeicher 2 kann beispielsweise ein Festplattenspeicher oder ein Magnetaufzeichnungs- MAZ Band sein. Bei der Postproduktion kann das A/V-Quellmaterial geschnitten oder bearbeitet werden, um bestimmte Parameter, wie zum Beispiel die Farbe, zu verändern. Bei der Postproduktion werden hochwertige Signale verwendet, zum Beispiel ein unkomprimiertes digitales serielles Komponentensignal DSC mit einem Abtastraster von 4:4:4 (R:G:B bzw. Y:C_{B}:C_{R}) oder 4:4:2. Zur Postproduktion werden die A/V-Daten in einem Produktionsserver 4 gespeichert. Ein Produktionsserver 4 ist ein Server mit hoher Speicherkapazität, der Video- und Audiomaterial für eine gemeinsame Nutzung mehrerer nichtlinearer Schnittplätze zur Verfügung stellen kann.

Nach der Postproduktion können die A/V-Daten in einem Archivserver 6 gespeichert werden oder direkt an einen Sendeserver 10 übermittelt werden. Oft werden nach der Postproduktion die Daten auf ein gewisses Maß komprimiert, bspw. mittels des bekannten MPEG2 Verfahrens, um Speicherplatz effizienter nutzen zu können. Da die Entwicklung der Videodatenformate kaum absehbar ist, werden Formate bevorzugt, die jedes Bild speichern und nicht mit einer langen Group of Pictures GOP arbeiten, weshalb keine höhere Datenkompression durchgeführt wird. Die in dem Archivserver 6 gespeicherten Videosignale können auch unkomprimiert, beispielsweise im bekannten *.avi-Format, gespeichert werden.

Eine Übertragungseinrichtung 8 überträgt die Daten aus dem Archivserver 6 oder direkt vom Produktionsserver 4 bei Bedarf auf einen Sendeserver 10. Ein Sendeserver 10 hält A/V-Daten für die Ausstrahlung, z.B. Übertragung zum Endverbraucher über Broadcast-, Multicast-, oder Singlecastverfahren, vor. Insbesondere können vom Sendeserver 10 die A/V-Daten für eine IP-TV Infrastruktur 14 bereitgestellt werden. Die im Sendeserver 10 gespeicherten Signale können dazu über eine serielle digitale Videoschnittstelle SDI ausgegeben und Hardwareenkodern zugeführt werden, um die Signale in ein anderes Format, wie H.264 (MPEG4), zu kodieren. Es wird ein Enkoder 12₁, 12₂, ..., 12ₙ pro Übertragungskanal 1, 2, ..., n benötigt.

Bei den Systemen nach dem Stand der Technik ergeben sich Probleme durch die enormen Mengen an Speicherplatz, die von den Videosignalen benötigt werden, sowie durch die Tatsache, dass diese Signale zwischen dem Produktionsstandort und dem Ausspielort, d.h. dem Standort des Sendeservers 10 und der folgenden IP-TV Komponenten, übertragen werden müssen.

Die Aufgabe der vorliegenden Erfindung besteht darin, eine Vorrichtung und ein Verfahren bereitzustellen, wodurch eine schnellere und kostengünstigere Datenverarbeitung von A/V-Daten bis zur Ausgabe an ein IP-TV Netzwerk, insbesondere für die Ausgabe von sich wiederholenden Inhalten wie Schleifen, erreicht wird.

Die Aufgabe wird durch die Merkmale der Ansprüche gelöst. Ein Aspekt der Erfindung basiert auf der frühzeitigen Kodierung der A/V-Daten in das Zielformat, um in den nachfolgenden Schritten, insbesondere der Speicherung und der Übertragung der Daten vom Produktionsstandort zum Ausspielort, den Verarbeitungsaufwand zu minimieren. Dazu wird gemäß einem Aspekt der vorliegenden Erfindung das Audio/Video Quellmaterial, falls noch nicht geschehen komprimiert, beispielsweise MPEG2 oder MPEG4, und enkodiert. Die A/V-Daten können nach der Enkodierung beispielsweise in Form eines Transportstroms aufgezeichnet werden. Nach einer optionalen Bearbeitung der Transportströme werden die Daten vorzugsweise als Transportstrom zu einem Ausspielort übertragen, beispielsweise auf einen Sendeserver. Der Sendeserver stellt die A/V-Daten zur Ausgabe an ein IP-TV Netzwerk bereit.

Durch den Einsatz des erfindungsgemäßen Verfahrens bzw. der erfindungsgemäßen Vorrichtung wird wesentlich weniger Hardware für Speicherung und Übertragung der A/V-Daten benötigt. Weiter werden weniger Enkoder benötigt, da diese vorzugsweise nur am Produktionsstandort eingesetzt werden.

### Kurzbeschreibung der Figuren

Es werden beispielhaft veranschaulichende, nicht-einschränkende Ausführungsformen der vorliegenden Erfindung unter Bezugnahme auf die beigefügten Zeichnungen beschrieben, in denen die selbe Bezugsziffer verwendet wird, um die selben oder ähnliche Komponenten in unterschiedlichen Figuren zu bezeichnen. Es zeigen:
Fig. 1 ein Blockdiagramm eines Systems nach dem Stand der Technik; und
Fig. 2 ein Blockdiagramm eines erfindungsgemäßen Systems.

### Detaillierte Beschreibung

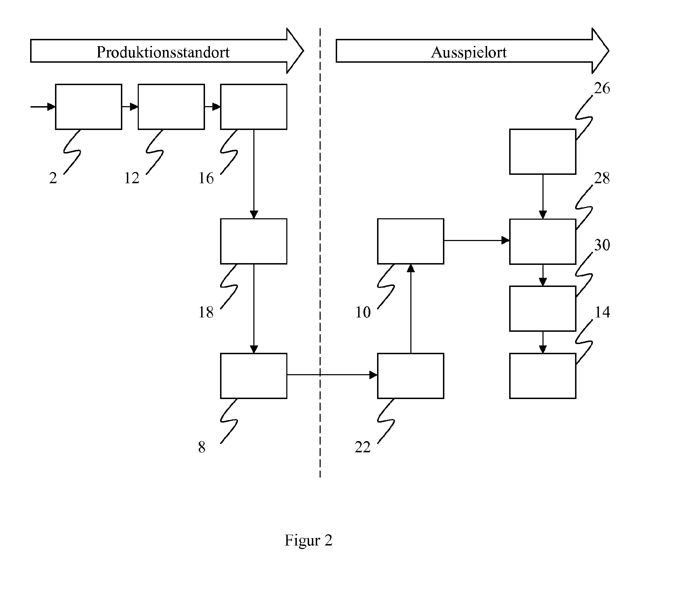

Fig. 2 zeigt eine bevorzugte Ausführungsform des erfindungsgemäßen Systems. Fertig produziertes Quellmaterial, beispielsweise ein fertiger Clip, Beitrag oder ein Spielfilm, wird aus einem Quellmaterialspeicher 2, beispielsweise ein Festplattenspeicher oder eine MAZ, an einen Enkoder 12 ausgespielt. Der Quellmaterialspeicher 2 kann die A/V-Daten über eine analoge oder digitale Schnittstelle, wie SDI-HD oder SDI an den mindestens einen Enkoder 12 übertragen. Es können auch zwei oder mehrere Enkoder 12 eingesetzt werden. In dem Enkoder 12 erfolgt die Kodierung der A/V-Daten in das gewünschte Zielformat. Das gewünschte Zielformat und dessen Parameter sind abhängig von den Rahmenbedingungen und Qualitätsanforderungen der Distributoren der A/V-Daten, z.B. Live-IP-TV-Sender. Ein Zielformat kann beispielsweise MPEG2, MPEG4 oder JPEG2000 sein.

Das vom Enkoder 12 bereitgestellte Signal kann über einen IP- oder ASI-Ausgang des Enkoders 12 als Transportstrom an ein geeignetes Aufnahmegerät 16 zur Aufzeichnung übermittelt werden. Diese Aufzeichnung kann beispielsweise durch einen PC/Server durchgeführt werden. Vorzugsweise wird auf diesem PC/Server der vorhandene Transportstrom in einer Bearbeitungseinrichtung 18 mit einer geeigneten Software bearbeitet. Bei dieser Bearbeitung können am Anfang und/oder am Ende des ClipsBeitrags/Spielfilms einzelne Rahmen des Transportstroms entfernt werden. Vorzugsweise beginnt der Transportstrom mit einem intrakodierten 1-Rahmen und endet mit dem letzten Rahmen vor einem 1-Rahmen, damit eine Schleife entsteht, in der dieser Clip oder Beitrag problemlos wiederholt werden kann. Diese Art Bearbeitung erfordert keine hochwertigen Signale wie bei der Postproduktion. Die AV-Daten können optional in einem Archivserver gespeichert werden. Eine Neukodierung der AV-Daten erfolgt gemäß der Erfindung nicht mehr, das heißt alle Einstellungen wie Bitraten, Tabellen und GoP-Strukturen bleiben unverändert.

Die A/V-Daten werden vorzugsweise in Form eines Transportstromes mittels einer Übertragungseinrichtung 8 vom Produktionsstandort auf einen Datenserver 22 an einem Ausspielort übertragen. Diese Datenübertragung kann über eine IP-Verbindung mittels entsprechender Übertragungsprotokolle, wie beispielsweise FTP, stattfinden. Weiter ist eine gesicherte Datenübertragung über IP-Sec oder eine Tunnellösung möglich, weshalb sich gegebenenfalls noch weitere Server in der Übertragungsstrecke befinden können. Alternativ kann die Datenübertragung auch über Wechselplatten erfolgen, falls keine feste Verbindung zu dem Zielsystem besteht, oder eine bestehende Festverbindung unzureichend hinsichtlich der zu übertragenden Datenmenge ist.

Auf dem Zielsystem, das vorzugsweise einen Sendeserver 10 aufweist, werden die Transportströme in einem Daten-System abgelegt. Das Zielsystem kann ein PC/Server sein und kann über zwei oder mehrere IP-Schnittstellen verfügen. Eine Schnittstelle dient zur Konfiguration und Steuerung des Zielsystems. Eine zweite Schnittstelle kann direkt mit einem Multiplexer 28 oder alternativ mit einem Ausgangsschalter verbunden sein, um die A/V-Daten für folgende IP-TV Komponenten bereitzustellen. Über diese zweite Schnittstelle können die Transportströme beispielsweise als Multicast-Transportströme in einer Endlosschleife direkt in das IP-TV Netzwerk eingespielt werden. Je nach Leistungsfähigkeit des Systems und der Schnittstellen stehen hier vorzugsweise mehrere Kanäle zur Verfügung. Die Übertragung der A/V-Daten vom Multiplexer zum Empfänger kann über IP-TV Middleware 30 in die IP-TV Infrastruktur übertragen werden. Die IP-TV Middleware 30 steuert die Versendung der Daten über das IT-TV Netzwerk.

Gemäß eines Aspekts der Erfindung weist das Zielsystem ein Graphical User Interface (GUI) auf, das in der Lage ist, die einzelnen Transportströme aus dem Daten-System zu selektieren und Mulitcastadressen zuzuweisen. Weitere Möglichkeiten bestehen in einer zeitgesteuerten Wiedergabe oder im Verwalten von Wiedergabelisten über eine integrierte Datenbank, und sind von dem Detaillierungsgrad der Steuersoftware, die den Sendeserver steuert, abhängig.

Wie in Fig. 2 gezeigt, können geeignete Daten, wie beispielsweise Service Information SI-Daten, die von einem Zusatzdatengenerator 26 bereitgestellt werden, über den Multiplexer 28 dem Transportstrom hinzugefügt werden. Solche SI-Daten können EPG-Informationen aufweisen.

## Patentansprüche

1. Verfahren zum Bereitstellen von Audio- und/oder Videodaten für IP-TV mit den Schritten:
a) Empfangen von Quellmaterial;
b) Enkodieren des Quellmaterials in ein Zielformat; und
c) Übertragen des Quellmaterials im Zielformat in einen Speicher (16), wobei der Speicher (16) geeignet ist, Quellmaterial auszugeben.

2. Verfahren nach Anspruch 1, mit dem Schritt b1) Aufzeichnen des enkodierten Quellmaterials im Zielformat, vorzugsweise als Transportstrom.

3. Verfahren nach Anspruch 1 oder 2, mit dem Schritt b2) Bearbeiten des Quellmaterials im Zielformat, vorzugsweise dergestalt, dass ein Anfang eines Videoinhalts ein Intrakodiertes Bild ist.

4. Verfahren nach einem der vorhergehenden Ansprüche, mit dem Schritt b3) Übertragen des Quellmaterials im Zielformat in einen Zwischenspeicher, vorzugsweise einen Datenserver (22).

5. Verfahren nach einem der vorhergehenden Ansprüche, mit dem Schritt c1) Ausgeben des im Zielformat gespeicherten Quellmaterials.

6. Verfahren nach Anspruch 5, mit dem Schritt c2) Multiplexen des Quellmaterials mit Zusatzdaten, vorzugsweise Service-Information.

7. Verfahren nach Anspruch 6, mit dem Schritt c3) Ausgeben der gemultiplexten Daten über ein IP-TV Netzwerk an einen Benutzer.

8. Verfahren nach einem der vorhergehenden Ansprüche, wobei das Zielformat MPEG2, MPEG4 oder JPEG2000 ist.

9. System zum Bereitstellen von Audio- und/oder Videodaten für IP-TV aufweisend:
- eine Einrichtung zum Bereitstellen von Quellmaterial (2);
- einen Enkoder (12) zum Enkodieren des Quellmaterials in ein Zielformat;
- einen Speicher (16) zum Speichern des enkodierten Quellmaterials, wobei der Speicher weiter geeignet ist, Quellmaterial auszugeben.

10. System nach Anspruch 9, weiter mit einem Multiplexer (28) zum Multiplexen des gespeicherten enkodierten Quellmaterials mit Zusatzdaten, vorzugsweise Service-Information, wobei der Multiplexer geeignet ist, die gemultiplexten Daten über ein IP-TV Netzwerk an einen Benutzer auszugeben.
